# EUROPÄISCHE PATENTSCHRIFT

(11) **EP 1 348 617 B1**
(45) Veröffentlichungstag und Bekanntmachung des Hinweises auf die Patenterteilung: **06.09.2006**
(21) Anmeldenummer: 03450077.7
(22) Anmeldetag: 26.03.2003
(51) Int. Cl.: B62K 3/00, B62K 5/02

(54) **Dreirädriges Fahrzeug mit Neigungslenkung**
Three wheeled vehicle with inclination steering
Véhicule à trois roues avec control de direction par inclinaison

(30) Priorität: 27.03.2002 AT 4822002
(43) Veröffentlichungstag der Anmeldung: 01.10.2003
(73) Patentinhaber: Hailzl, Christian, Dipl.-Ing., 1180 Wien (AT)
(72) Erfinder: Hailzl, Christian, Dipl.-Ing., 1180 Wien (AT)
(74) Vertreter: Ellmeyer, Wolfgang

(56) Entgegenhaltungen:
- FR-A- 2 689 082
- FR-A- 2 796 358

## Beschreibung

Die Erfindung betrifft ein dreirädriges Fahrzeug, insbesondere einen Trittroller, mit einem Rahmen, bestehend aus zwei Längsholmen, einem vorderen Querlenker, einem gelenkten Vorderrad, das am vorderen Querlenker angeordnet ist, welcher vorderer Querlenker über Gelenke an den Vorderenden der zwei Längsholme mit diesen verbunden ist, und zwei ungelenkten Hinterrädern, die jeweils seitlich an den Längsholmen angeordnet sind, einem hinteren Querlenker, der über Gelenke an die hinteren Enden der zwei Längsholme angelenkt ist, sodass die vier Teile des Rahmens an ihren Enden durch die Gelenke verbunden sind.

Der bisherige Stand der Technik umfasst Trittroller mit einem Vorder- und einem Hinterrad (herkömmliche Trittroller und Micro-Scooter), bzw. Skateboards mit einem am Board befestigten Lenkstock und skateboardähnliche Fahrzeuge mit 2 lenkbaren Vorderrädern und einem Lenkstock (Kick-Board, US 6 155 553 A).

FR-A-2.796.358 beschreibt ein neigbares Dreirad, das ein Fahrgestell mit einem Vorderrad und zwei Längsholmen, die an ihrem hinteren Ende jeweils ein Rad tragen, sowie einen vorderen und einen hinteren Querlenker aufweist. Die beiden Längsholme sind jeweils durch zwei Achsen mit dem vorderen Querlenker verbunden. Die Lenkung erfolgt durch Drehen der Lenkstange, und Neigung und Lenkung können unabhängig voneinander erfolgen.

Die technische Aufgabe, die mit dieser Erfindung gelöst werden soll, ist die Fortbewegung mit einem Fahrzeug, das sich durch hohen Fahrkomfort, sensibler, mit einer Hand zu bedienender Lenkung und kompakter Bauweise auszeichnet, wobei generell davon auszugehen ist, dass sich hoher Fahrkomfort bei Verwendung von großen, luftbereiften Rädern ergibt.

Zur Lösung der oben gestellten Aufgaben ist ein erfindungsgemäßes dreirädriges Fahrzeug, insbesondere ein Trittroller, vor allem dadurch gekennzeichnet, dass die verlängert gedachten Achsen der Gelenke im Wesentlichen einen gemeinsamen Schnittpunkt im Endlichen haben, sodass allein durch eine durch die Anordnung der Gelenke ermöglichte Verschwenkung der Teile des Rahmens zueinander am Vorderrad ein Lenkeinschlag entsteht.

Weitere erfindungsgemäße Kennzeichen, die dabei allein oder in Kombination erfüllt sein können, sind einerseits, dass die Verschwenkung der Teile des Rahmens zueinander durch einen starr mit einem der beiden Längsholme verbundenen und damit im Wesentlichen quer zur Fahrtrichtung zu neigenden Lenkstock erfolgt, dass eine Aufstellfläche zum Transport von Personen oder Lasten gelenkig mit dem Rahmen verbunden ist, sowie dass die Aufstellfäche ein Trittbrett ist, das am vorderen Ende am linken und am rechten Längsholm und am hinteren Ende mittig am hinteren Querlenker mittels einer die Verschwenkung der Rahmenteile nicht behindernden Aufhängung verbunden ist.

Eine sensible, mit einer Hand zu bedienende Lenkung ergibt sich durch die Verwendung eines Lenkstocks in Kombination mit einer speziellen Lenkmechanik, wobei ein Lenkeinschlag am Vorderrad durch neigen des Lenkstocks in die zu lenkende Richtung erfolgt und nicht, wie bei herkömmlichen Fahrzeugen hauptsächlich durch Drehung des Vorderrades mittels Lenkstange um eine im Wesentlichen senkrechte Achse.

Eine kompakte Bauweise ergibt sich auch durch die Anordnung der Aufstellfläche, insbesondere zwischen den beiden Hinterrädern, sodass der Abstand zwischen Vorder- und Hinterachse kleiner als bei herkömmlichen Trittrollern ausgeführt werden kann.

Dank der dreirädrigen Konstruktion wird keine besondere Vorrichtung zum Abstellen benötigt. Das Schieben des Fahrzeugs bedarf keiner aktiven Lenkung, da durch die spezielle Lenkmechanik ein Führen des Lenkgriffs ausreicht.

Auf die beiliegende Zeichnung mit 16 Figuren wird verwiesen, die als Ausführungsbeispiel einen Trittroller zeigen, und zwar:
- in Fig. 1 bis 4 den Trittroller im Kreuzriss, Aufriss, Schrägriss und Grundriss bei Geradeausfahrt,
- in Fig. 5 bis 8 ein vereinfachtes Modell im Kreuzriss, Aufriss, Schrägriss und Grundriss bei Geradeausfahrt,
- in Fig. 9 bis 12 ein vereinfachtes Modell im Kreuzriss, Aufriss, Schrägriss und Grundriss bei Kurvenfahrt,
- in Fig. 13 und 14 den Trittroller bei Geradeausfahrt und Kurvenfahrt in Ansicht von rechts hinten,
- und in Fig. 15 und 16 den Trittroller bei Geradeausfahrt und Kurvenfahrt in Ansicht von rechts vorne.

Zwecks Übersichtlichkeit der Zeichnung wird auf die Darstellung von Befestigungsmitteln wie Schrauben, Scheiben, Muttern, usw. verzichtet.

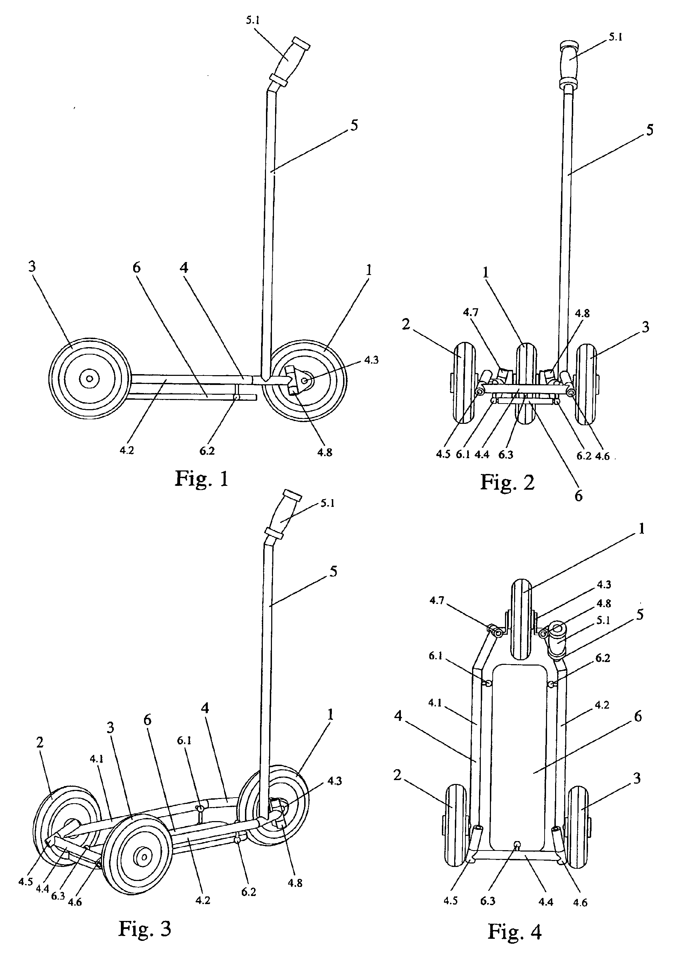

Gegenstand dieser Erfindung ist ein dreirädriges Fahrzeug, insbesondere ein Trittroller, wie in den Fig. 1 bis 4 dargestellt, bestehend aus einem Rahmen (4), einem gelenkten Vorderrad (1) und zwei ungelenkten Hinterrädern (2) und (3).

Der Rahmen (4) besteht aus einem linken (4.1) und einem rechten (4.2) Längsholm sowie aus einem vorderen (4.3) und einem hinteren Querlenker (4.4).

Die beiden Hinterräder (2) und (3) sind jeweils seitlich an den Längsholmen (4.1) und (4.2) und das Vorderrad (1) am vorderen Querlenker (4.3) angeordnet, wobei der vordere Querlenker (4.3) auch gleichzeitig als Achse des Vorderrades dienen kann.

Die vier Teile (4.1) bis (4.4) des Rahmens (4) sind an ihren Enden durch Gelenke (4.5), (4.6), (4.7) und (4.8) derart miteinander verbunden, dass die verlängert gedachten Gelenkachsen im Wesentlichen einen gemeinsamen Schnittpunkt haben.

Durch diese spezielle Anordnung der Gelenke wird eine Verschwenkung der Teile des Rahmens zueinander ermöglicht, wodurch am Vorderrad ein Lenkeinschlag erzielt wird.

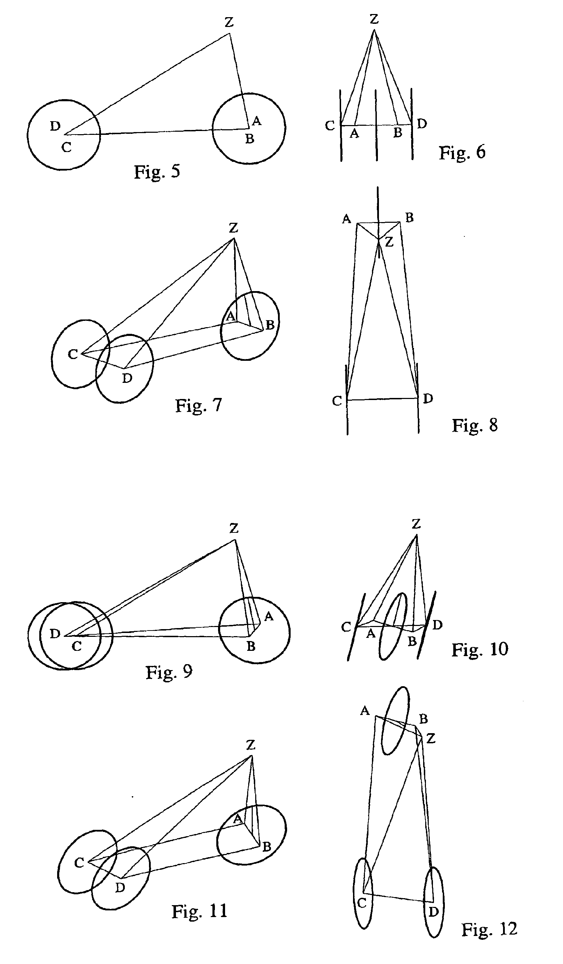

Zur Veranschaulichung der Lenkmechanik lässt sich der Trittroller, wie in Fig. 5 bis 12 dargestellt, auf folgendes Modell reduzieren:
Da die verlängert gedachten Achsen der Gelenke (4.5), (4.6), (4.7) und (4.8) der Teile (4.1) bis (4.4) des Rahmens (4), wie oben beschrieben, einen gemeinsamen Schnittpunkt Z haben, spannen sie eine Pyramide mit dem Scheitel Z auf.

In Fig. 5 bis 8 ist die Pyramide durch die Punkte A, B, C, D und Z dargestellt. Der Punkt A entspricht dem Schnittpunkt des linken Längsholms (4.1) mit dem vorderen Querlenker (= Vorderachse) (4.3), der Punkt B entspricht dem Schnittpunkt des rechten Längsholms (4.2) mit dem vorderen Querlenker (4.3), während Punkt C und D jeweils durch den Schnittpunkt des linken (4.1) bzw. rechten (4.2) Längsholms mit dem hinteren Querlenker (4.4) gegeben sind.
Die Räder lassen sich vereinfacht durch Scheiben darstellen. Die beiden Hinterräder sind jeweils fix mit den beiden Seitenflächen der Pyramide verbunden: das linke Hinterrad mit der linken Seitenfläche ACZ und das rechte Hinterrad mit der rechten Seitenfläche BDZ. Das Vorderrad ist mit der vorderen Seitenfläche ABZ der Pyramide verbunden. Die Seitenflächen der Pyramide sind an ihren Kanten miteinander gelenkig verbunden.

Neigt man, wie in Fig. 9 bis 12 dargestellt, die rechte Seitenfläche BDZ - in Fahrtrichtung gesehen - nach rechts, so erkennt man, dass die hintere Pyramidenfläche CDZ um die Achse DZ eine Drehung erfährt, da der Bodenkontakt des linken Hinterrades erhalten bleiben muss. Daraus ergibt sich, dass der Punkt C, bedingt durch die Schräglage der Drehachse DZ nach vorne wandert. Diese Verschiebung des Punktes C überträgt sich über die linke Pyramidenfläche ACZ auf den Punkt A, der dadurch vor dem Punkt B zu liegen kommt. Damit ergibt sich eine Verdrehung der vorderen Pyramidenfläche ABZ um die Drehachse BZ. Da die Achse des Vorderrades fix mit der vorderen Pyramidenfläche ABZ verbunden ist, resultiert daraus ein Lenkeinschlag.

Durch die Wahl der Lage des Scheitelpunktes Z lässt sich das Verhalten der Lenkung bestimmen. Je höher der Punkt Z gewählt wird, umso direkter reagiert die Lenkung auf die Neigung der Pyramide. Einen ähnlichen Effekt erhält man durch Verkleinern des Gelenkabstandes an der Vorderachse, im Modell der Abstand der Punkte A und B. Als praktikabel hat sich erwiesen, den Scheitelpunkt Z so zu wählen, dass im Kreuzriss des Modells (Fig. 5) die Strecke BZ zur Stecke BD einen Winkel von 80 Grad einschließt, während die Strecke DZ zur Strecke DB einen Winkel von ca. 30 Grad einschließt.

Die im Modell beschriebene Neigung der Pyramide wird im Ausführungsbeispiel durch einen starr mit einem der beiden Längsholme verbundenen Lenkstock (5) bewerkstelligt, indem der am oberen Ende des Lenkstocks (5) befindliche Lenkgriff (5.1) quer zur Fahrtrichtung in die zu lenkende Richtung bewegt wird.

Rechtshänder werden es bevorzugen, den Lenkstock am rechten Längsholm (4.2) zu montieren, Linkshänder am linken Längsholm (4.1).

Mit dem Rahmen (4) ist ein Trittbrett (6) verbunden. Aus obiger Beschreibung erkennt man, dass die Verbindung des Trittbretts (6) am Rahmen (4) gelenkig erfolgen muss, um die Verschwenkung der einzelnen Teile des Rahmens (4) zueinander nicht zu behindern. Zweckmäßig erfolgt die Verbindung an drei Punkten. In Fig. 1 bis 4 ist das Trittbrett (6) am vorderen Ende durch zwei Bolzen (6.1) und (6.2), die jeweils über zwei Kugelgelenke mit dem Trittbrett (6) und den Längsholmen (4.1) bzw. (4.2) verbunden sind, aufgehängt. Die hintere Verbindung (6.3) des Trittbretts (6) soll nur die Neigung des Trittbretts (6) relativ zum hinteren Querlenker (4.4) ermöglichen, was über die Befestigung mit einem Kugelgelenk erfolgt. Die in Fig. 1 bis 4 dargestellten Kugelgelenke sollen lediglich die Bewegungsfreiheit der Aufhängung verdeutlichen, andere Befestigungsmittel wie Ketten, Kunststoffgurte, Seile usw. sind möglich.

In Bewegung gesetzt wird der Trittroller, indem ein Fuß auf das Trittbrett (6) gesetzt wird, die Hand des auf der selben Seite befindlichen Armes den Lenkgriff (5.1) umschließt und mit dem anderen Fuß abgestoßen wird. Denkbar ist auch, das Fahrzeug mittels geeigneter Motorisierung in Bewegung zu setzen.

Zur Erhöhung der Verkehrssicherheit kann der Trittroller mit Bremsen, Lichtanlage, Klingel usw. versehen werden.

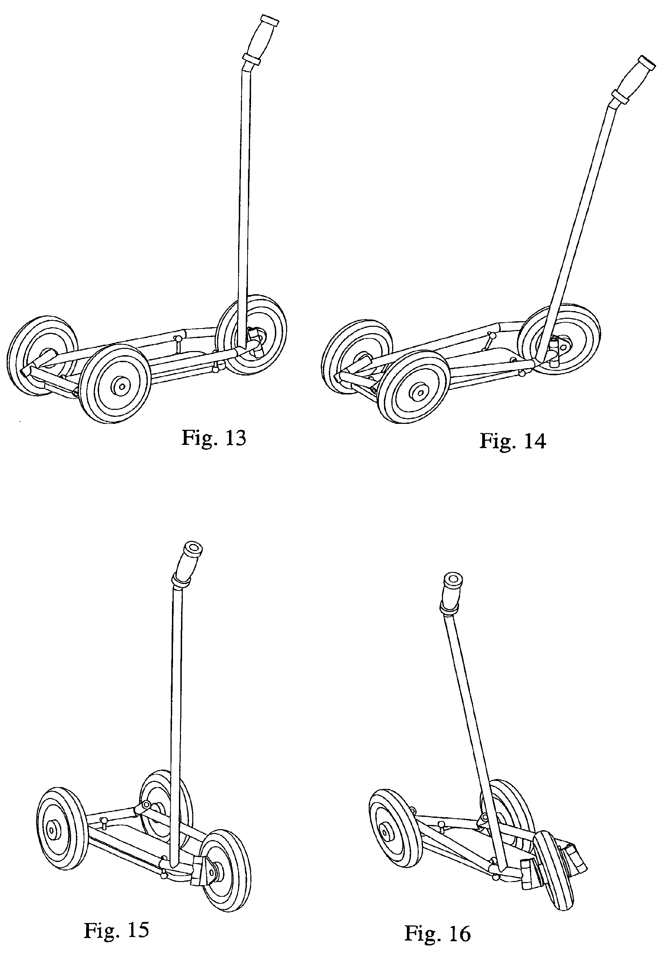

In den Figuren 13 bis 16 ist der Trittroller in Geradeausfahrt und in Kurvenfahrt jeweils in der Ansicht von rechts hinten und rechts vorne dargestellt.

## Patentansprüche

1. Dreirädriges Fahrzeug, insbesondere ein Trittroller, mit einem Rahmen (4), bestehend aus zwei Längsholmen (4.1, 4.2), einem vorderen Querlenker (4.3), einem gelenkten Vorderrad (1), das am vorderen Querlenker (4.3) angeordnet ist, welcher vorderer Querlenker (4.3) über Gelenke (4.7, 4.8) an den Vorderenden der zwei Längsholme (4.1, 4.2) mit diesen verbunden ist, und zwei ungelenkten Hinterrädern (2, 3), die jeweils seitlich an den Längsholmen (4.1, 4.2) angeordnet sind, einem hinteren Querlenker (4.4), der über Gelenke (4.5, 4.6) an die hinteren Enden der zwei Längsholme (4.1, 4.2) angelenkt ist, sodass die vier Teile (4.1, 4.2, 4.3, 4.4) des Rahmens (4) an ihren Enden durch die Gelenke (4.5, 4.6, 4.7, 4.8) verbunden sind,
**dadurch gekennzeichnet, dass** die verlängert gedachten Achsen der Gelenke (4.5, 4.6, 4.7, 4.8) im Wesentlichen einen gemeinsamen Schnittpunkt im Endlichen haben, sodass allein durch eine durch die Anordnung der Gelenke (4.5, 4.6, 4.7, 4.8) ermöglichte Verschwenkung der Teile des Rahmens (4) zueinander am Vorderrad (1) ein Lenkeinschlag entsteht.

2. Dreirädriges Fahrzeug nach Anspruch 1, **dadurch gekennzeichnet, dass** die Verschwenkung der Teile (4.1, 4.2, 4.3, 4.4) des Rahmens (4) zueinander durch einen starr mit einem der beiden Längsholme (4.1, 4.2) verbundenen und damit im Wesentlichen quer zur Fahrtrichtung zu neigenden Lenkstock (5) erfolgt.

3. Dreirädriges Fahrzeug nach Anspruch 1 oder 2, **dadurch gekennzeichnet, dass** eine Aufstellfläche (6) zum Transport von Personen oder Lasten gelenkig mit dem Rahmen (4) verbunden ist.

4. Dreirädriges Fahrzeug nach Anspruch 3, **dadurch gekennzeichnet, dass** die Aufstellfläche (6) ein Trittbrett ist, das am vorderen Ende am linken (4.1) und am rechten (4.2) Längsholm und am hinteren Ende mittig am hinteren Querlenker (4.4) mittels einer die Verschwenkung der Rahmenteile (4.1, 4.2, 4.3, 4.4) nicht behindernden Aufhängung verbunden ist.

## Claims

1. A three-wheeled vehicle, in particular a kick scooter, having a frame (4) consisting of two longitudinal rails (4.1, 4.2), a front transverse control arm (4.3), a steered front wheel (1) arranged at said front transverse control arm (4.3), said front transverse control arm (4.3) being connected to said two longitudinal rails (4.1, 4.2) at their front ends by joints (4.7, 4.8), and two unsteered rear wheels (2, 3), each being arranged laterally to said longitudinal rails (4.1, 4.2), a rear transverse control arm (4.4) which is articulated to the rear ends of said two longitudinal rails (4.1, 4.2) by joints (4.5, 4.6) so that the four parts (4.1, 4.2, 4.3, 4.4) of the frame (4) are interconnected at their ends by said joints (4.5, 4.6, 4.7, 4.8), **characterised in that** the imaginary extensions of the axes of said joints (4.5, 4.6, 4.7, 4.8) have substantially one common point of intersection in finite space so that a steering angle is produced at the front wheel (1) by the mere tilting of said parts of the frame (4) relative to each other, which is enabled by the arrangement of said joints (4.5, 4.6, 4.7,4.8).

2. The three-wheeled vehicle according to claim 1, **characterised in that** the tilting of said parts (4.1, 4.2, 4.3, 4.4) of the frame (4) relative to each other is triggered by a steering column (5) which is rigidly connected to one of said two longitudinal rails (4.1, 4.2) and is therefore to be inclined substantially transversally to the direction of travel.

3. The three-wheeled vehicle according to claim 1 or 2, **characterised in that** a base plate (6) for transporting persons or loads is linked to said frame (4).

4. The three-wheeled vehicle according to claim 3, **characterised in that** said base plate (6) is a footboard which is connected at its front end to the left (4.1) and the right (4.2) longitudinal rails and at its rear end centrally to said rear transverse control arm (4.4) by means of a suspension which does not interfere with the tilting of said frame parts (4.1, 4.2, 4.3, 4.4).

## Revendications

1. Véhicule à trois roues, en particulier une trottinette, avec un cadre (4) composé de deux barres longitudinales (4.1, 4.2), un bras oscillant transversal de devant (4.3), une roue avant directrice (1) qui est disposée au bras oscillant transversal de devant (4.3), le bras oscillant transversal de devant (4.3) étant relié aux deux barres longitudinales (4.1, 4.2), aux extrémités antérieures de celles-ci, par des joints articulés (4.7, 4.8), et deux roues arrières non directrices (2, 3) qui sont disposées latéralement à l'une et à l'autre des barres longitudinales (4.1, 4.2), un bras oscillant transversal arrière (4.4) articulé aux extrémités postérieures des deux barres longitudinales (4.1, 4.2) par des joints articulés (4.5, 4.6), de sorte que les quatre constituants (4.1, 4.2, 4.3, 4.4) du cadre (4) sont reliés entre eux à leurs extrémités par les joints articulés (4.5, 4.6, 4.7, 4.8), **caractérisé en ce que** les extensions imaginaires des axes des joints articulés (4.5, 4.6, 4.7, 4.8) ont sensiblement un point d'intersection commun dans l'espace fini, de sorte que le braquage de la roue avant (1) se produit seul par l'inclinaison des constituants du cadre (4) relatif les uns aux autres, qui est rendue possible par l'arrangement des joints articulés (4.5, 4.6, 4.7, 4.8).

2. Véhicule à trois roues selon la revendication 1, **caractérisé en ce que** l'inclinaison des constituants (4.1, 4.2, 4.3, 4.4) du cadre (4) relatif les uns aux autres est réalisée au moyen d'une colonne de direction (7) qui est reliée rigidement à l'une des deux barres longitudinales (4.1, 4.2) et qui est donc à incliner dans une direction sensiblement transversale au sens de la marche.

3. Véhicule à trois roues selon la revendication 1 ou 2, **caractérisé en ce qu'**une planche de base (6) pour le transport de personnes et de charges est reliée au cadre (4) de façon articulée.

4. Véhicule à trois roues selon la revendication 3, **caractérisé en ce que** la planche de base (6) est un repose pied qui, à son extrémité antérieure, est relié à la barre longitudinale droite (4.1) et gauche (4.2) et, à son extrémité postérieure, est relié au milieu du bras oscillant transversal arrière (4.4) au moyen d'une suspension qui ne gêne pas l'inclinaison des constituants (4.1, 4.2, 4.3, 4.4) du cadre.
